# EUROPEAN PATENT SPECIFICATION

(11) **EP 4 331 338 B1**
(45) Date of publication and mention of the grant of the patent: **04.11.2026**
(21) Application number: 22461600.3
(22) Date of filing: 30.08.2022
(51) Int. Cl.: A01D 34/66, A01D 34/81, A01D 34/76

(54) **DISC MOWING DEVICE**
SCHEIBENMÄHVORRICHTUNG
DISPOSITIF DE TONTE DE DISQUES

(43) Date of publication of application: 06.03.2024
(73) Proprietor: Talex Spolka Z Ograniczona Opdowiedzialnoscia, 77-141 Borzytuchom (PL)
(72) Inventor: Jaworski, Karol, 77-100 Bytow (PL)
(74) Representative: AOMB Polska Sp. z.o.o.

(56) References cited:
- EP-A1- 3 262 916
- EP-A1- 3 315 001
- EP-A2- 0 240 084
- EP-A2- 3 143 865
- BR-U2- 202020 001 340
- US-A- 4 149 359
- US-B1- 8 020 363

## Description

### Technical field

The invention generally relates to the field of agricultural machinery for mowing plants and grasses in agricultural areas. More particularly, the invention relates to a disc mowing device, configured to be connected to a motor vehicle, in particular to an agricultural tractor.

### Background

Numerous disc mowing devices, referred to popularly as disc mowers, used for mowing agricultural areas, are known in the prior art. The design of these devices is dependent on the size of the area to be mowed. Therefore, for mowing large areas, heavy-duty mowers are used, which results in their greater weight. These are the so-called heavy mowers. Lighter devices, so-called light mowers, on the other hand, are used for mowing smaller areas. Light mowers are less durable, wear out quickly and can be damaged when mowing large areas. Small farm owners use smaller devices with relatively lower strength and efficiency. Achieving a heavy-duty mowing device requires to use a heavier structure and appropriate stiffening of its individual elements. This generates a high manufacturing cost of such a device, due to the amount of material used and frequently a more complicated method of manufacturing.

European patent application EP3143865A1 discloses a mowing mechanism with at least one mowing bar, which includes a plurality of mowing members bearing-mounted to a carrier element formed as a mowing bar cover, wherein each mowing member includes a mowing plate and at least one blade, which is arranged on the mowing plate directly or by way of a blade carrier. Several strippers facing towards the mowing bar cover are fixed to the mowing plate of the respective mowing member, with at least one first stripper being at a smaller spacing from the mowing bar cover than at least one second stripper. Similar design of the mowing bar with a gear system is disclosed in EP1776855A1.

EP3597024A1 discloses an exemplary design of a mowing disc.

Yet another document EP3262916A1 describes a rotating disc mower with a lightened side mowing bar comprising a fixed frame, a movable frame and a lightening device of the mowing bar, wherein the mowing bar is positioned on a supporting arm articulated with respect to the movable frame. A cylinder is positioned between the supporting arm and the movable frame, which keeps the supporting arm of the mowing bar raised. A release rod is also positioned between the fixed frame and the mowing bar and two cylinders respectively positioned between the movable frame and the supporting arm, wherein a first hydraulic cylinder is also provided, positioned between the fixed frame and the release rod, and a second hydraulic cylinder, positioned between the movable frame and the supporting arm of the mowing bar. The first and second hydraulic cylinders are hydraulically connected and activated by the release rod, wherein said two hydraulic cylinders are constrained at a first end to a pin, passing further into the supporting arm, and at the other opposite end rotatably arranged with respect to the movable frame and positioned inside slots of ears that extend from the movable frame.

The solution described in the document BR202020001340U2 shows generally a disc mower structure according to the preamble of the independent claim.

Further mowing devices are known from US 8 020 363 B1, EP 3 315 001 A1, US 4 149 359 A and EP 0 240 084 A2.

### Summary of the invention

The objective of the invention is to develop a high-strength and relatively low-weight mowing device that can be successfully used for mowing both small and large agricultural areas, and therefore will combine the advantages of light and heavy mowers.

According to the present invention there is provided a disc mowing device configured to be coupled to a motor vehicle, in particular to an agricultural tractor, comprising:
a suspension system with a suspension frame by means of which the mowing disc device is being coupled to the motor vehicle,
a drive unit for driving an at least one mowing disc,
an at least one slide attached to a mowing bar from the bottom,
the mowing bar connected to the suspension frame and comprising:
   a bent bed,
   a cover,
   a gear system placed between the bent bed and the cover,
   the at least one mowing disc mounted on a vertical axis of rotation in the cover and coupled to the gear system,
   wherein the bent bed comprises a Z-shaped bend extending along one of long sides of the mowing bar, wherein in the area of said bend, an at least one reinforcing profile adhering at least partially to at least one of walls of said bend is attached to the bent bed,
   wherein the disc mowing device comprises two reinforcing profiles, i.e. a reinforcing angle profile and a reinforcing Z-profile, fastened to the bent bed in the area of the Z-shaped bend so that the reinforcing profiles overlap at least partially.

Preferably, the at least one reinforcing profile is attached to the bent bed by means of fastening elements, preferably in the form of screws, passing through fastening openings in the bent bed. profileprofileprofileprofilePreferably, walls of the reinforcing angle profile adhere with their entire surface to the two walls of the bend of the bent bed.

Preferably, two walls of the reinforcing Z-profile contact with their entire surface the corresponding surfaces of the walls of the reinforcing angle profile, wherein a third wall of the reinforcing Z-profile contact with its entire surface the corresponding wall surface of the bend of the bent bed.

In one of the embodiments, the suspension system additionally includes a lever mechanism based on a four-bar linkage comprising a tilting arm, a hydraulic cylinder and a relief spring, said lever mechanism connects the suspension frame to the mowing bar and is used to raise and lower the mowing bar.

In yet another preferred embodiment, the disc mowing device has guard rails positioned above the mowing bar, and attached to the suspension system and the mowing bar.

Preferably, the mowing disc consists of a housing, preferably in the form of a moulded body with openings for a blade holder, to which housing an at least one cleaning element is attached, and of an at least one mowing blade arranged in the blade holder.

### Advantageous effects of invention

Thanks to the use of a mowing device according to the invention, the functionality of the device has been increased, since it is possible to use the same single device for mowing both small and large areas. In addition, weight of a mowing bar has been reduced by use of an innovative stiffener. A less complex structure of the device facilitates the manufacturing and reduces its costs compared to stiffeners currently in use in the market which require complex manufacturing processes.

### Brief description of drawings

The invention will be now described in detail in a preferred embodiment with reference to the attached drawings in which:
Fig. 1 shows a perspective view of a disc mowing device according to the present invention.
Fig. 2 shows a cross-section of a mowing bar.

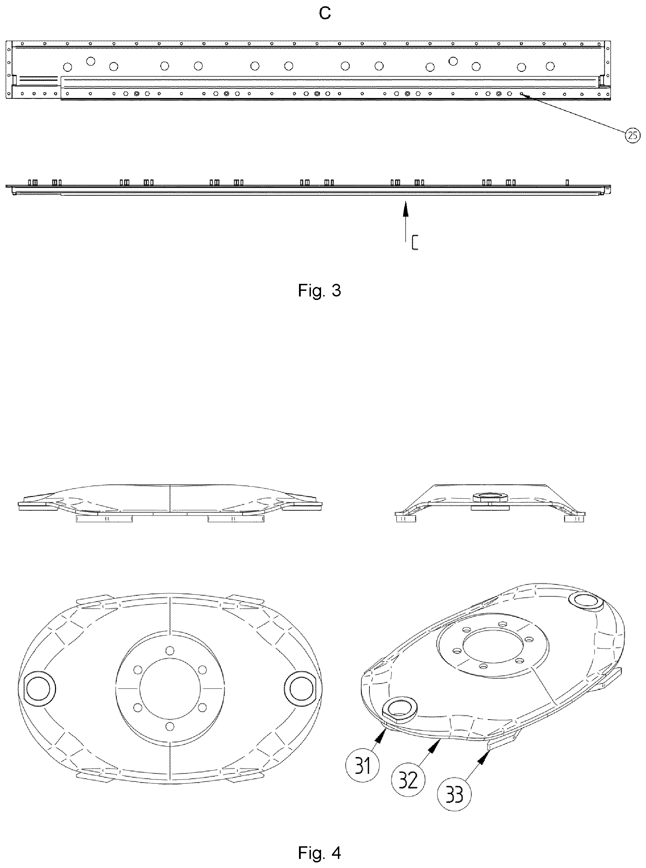

Fig. 3 shows a view of a bent bed.
Fig. 4 shows a view of a mowing disc.

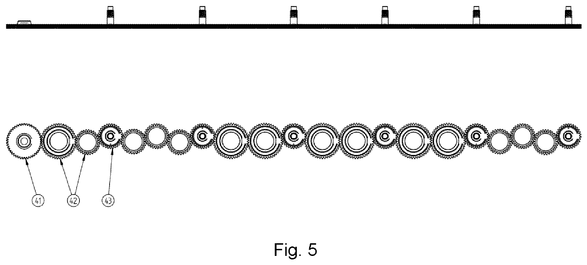

Fig. 5 shows schematically a gear system.

### Detailed description of a preferred embodiment of the invention

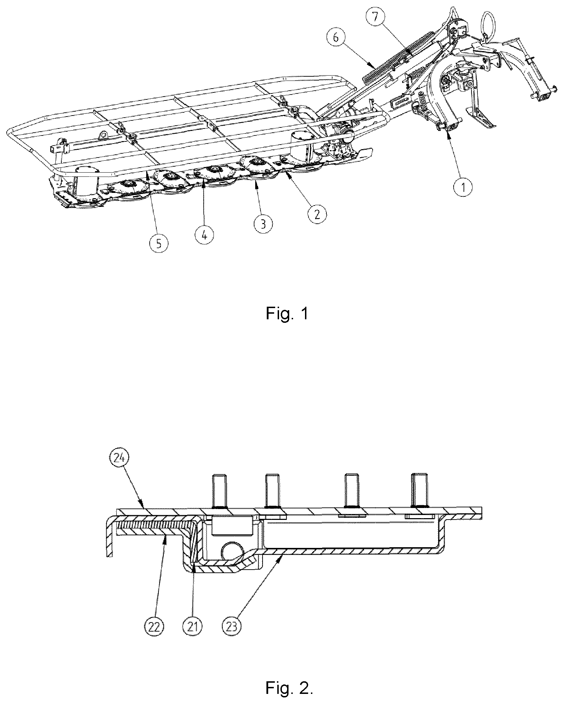

A disc mowing device according to one preferred embodiment of the invention is shown in details in a perspective view in Fig. 1.

According to this embodiment, the disc mowing device comprises a suspension system 1 equipped with a suspension frame by means of which the mowing device is being coupled to a motor vehicle, for example with a three-point linkage (TPL) located at the rear of the agricultural tractor.

The device is further equipped with a drive system with which the mowing discs are made to rotate. The drive system comprises a gear train with a gear wheel 41, idler wheels 42 and wheels with pin 43 on which the mowing discs 4 are indirectly mounted, thus forming a gear system. In order to drive the mowing discs 4, power from the agricultural tractor is transmitted from the tractor's power take-off (PTO) shaft via an intermediate shaft coupled to the mowing device's power input connection (PIC) shaft, which power input connection shaft is in turn connected to a belt transmission. The power is further transmitted through an intersecting axis gear to the gear system which rotate the mowing discs 4.

The suspension frame is connected to the mowing bar 2, the cross profile of which is shown in Fig. 2. The mowing bar 2 comprises a bent bed 23 and a cover 24. Between the cover 24 and the bent bed 23 a gear system is arranged.

The bent bed 23 has a Z-shaped bend extending along one of the long sides of the mowing bar and in its area, with at least one reinforcing profile being attached to this bend.

In the presented embodiment of the invention, the mowing device comprises two reinforcing profiles - a reinforcing angle profile 21 and a reinforcing Z-profile 22. They are attached to the bent bed 23 in the bend so that said reinforcing profiles overlap at least partially. This fastening of the reinforcing profiles provides for adequate stiffness of the device, whereby it is possible to use the mower to mow plants on almost any surface. As a result, the device has a low weight and high efficiency.

As clearly seen in Fig. 2, the walls of the reinforcing angle profile 21 adhere with their entire surface to the two walls of the bend of the bent bed 23, whereas two walls of the reinforcing Z-profile 22 contact with their entire surface the corresponding surfaces of the walls of the reinforcing angle profile 21. The third wall of the reinforcing Z-profile 22 contacts with its entire surface the corresponding wall surface of the bend of the bent bed 23. The combination of reinforcing elements configured this way ensures maximum use of the reinforcing function of these elements.

At least one reinforcing profile according to the invention is attached to the bent bed 23 by means of fastening elements, preferably in the form of screws, at the location of the fastening openings 25 in the bent bed 23. A person skilled in the art, using his/her elementary knowledge, may, however, use other methods of profile fastening, such as welding or electric resistance welding.

The mowing disc 4 consists of a housing 32 in the form of a moulded body with openings for a blade holder 31, to which housing 32 at least one cleaning element 33 is attached, and of at least one mowing blade arranged in the opening for the blade holder 31. The mowing disc 4 is equipped with mowing blades responsible for mowing plants, characterized by a streamlined shape and devoid of sharp edges and corners. This shape reduces the abrasive wear, which translates into reduced resistance of the flowing mass. It is preferred that the housing 32 is made of materials which, after having been subjected to a hardening process, show abrasion resistance properties. In addition, this shape of the housing 32, in combination with the cleaning element 33, reduces the deposition of dirt between the bent bed 23 and the mowing disc 4.

According to a preferred embodiment of the invention, the mowing bar 2 has at least one slide 3 attached to its underside. The slide 3 is responsible for protecting the bent bed 23 during mowing. Its shape provides for reduction of the resistance exerted on the ground during mowing, and thus reduces the power demand.

The suspension system 1 may additionally include a lever mechanism based on an articulated quadrilateral comprising a tilting arm, a hydraulic cylinder 6 and a relief spring 7, which mechanism connects the suspension frame to the mowing bar 2 and is used to raise and lower the mowing bar 2. As a result, when the device is attached to a motor vehicle but not mowing, i.e. travelling to an agricultural area, it is possible to travel with the device lifted, which is more convenient and does not require the mower to be transported separately to the meadow.

Preferably, the disc mower is equipped with guard rails 5 positioned above the mowing bar 2 attached to the suspension system 1 and mowing bar 2. Their function is, i.a., to ensure adequate safety to the user of the device by preventing accidental contact with the mowing disc 4 while the mower is operating.

Preferably, the gear system consists of gears with a substantially smaller diameter than the wheels in the so-called heavy mowers, which additionally has an effect on the reduction of the weight of the device.

The disc mowing device according to the invention is characterized by a reduced noise emission as compared to mowers with heavy mowing bars. The noise is reduced by about 20%, whereby the device produces a sound level of about 80 dB.

## Claims

1. A disc mowing device, configured to be coupled to a motor vehicle, in particular an agricultural tractor, comprising:
a suspension system (1) with a suspension frame by means of which the disc mowing device is being coupled to the motor vehicle,
a drive unit for driving an at least one mowing disc (4),
an at least one slide (3) attached to a mowing bar (2) from the bottom,
the mowing bar (2) connected to the suspension frame and comprising:
a bent bed (23),
a cover (24),
a gear system placed between the bent bed (23) and the cover (24),
the at least one mowing disc (4) mounted on a vertical axis of rotation in the cover and coupled to the gear system,
wherein the bent bed (23) comprises a Z-shaped bend extending along one of long sides of the mowing bar, wherein in the area of this bend an at least one reinforcing profile adhering at least partially to an at least one of walls of said bend is attached to the bent bed (23),
**characterized in that** the disc mowing device comprises two reinforcing profiles, i.e. a reinforcing angle profile (21) and a reinforcing Z-profile (22), fastened to the bent bed (23) in the bend area so that the reinforcing angle profile (21) and a reinforcing Z-profile (22) overlap at least partially.

2. The disc mowing device, according to claim 1, **wherein** the at least one reinforcing profile is attached to the bent bed (23) by means of fastening elements, preferably in the form of screws, passing through fastening openings (25) in the bent bed (23).

3. The disc mowing device according to claim 1 or 2, **wherein** walls of the reinforcing angle profile (21) adhere with their entire surface to two walls of the bend of the bent bed (23).

4. The disc mowing device according to claim 3, **wherein** two walls of the reinforcing Z-profile (22) contact with their entire surface the corresponding surfaces of the walls of the reinforcing angle profile (21), and a third wall of the reinforcing Z-profile (22) contact with its entire surface the corresponding wall surface of the bend of the bent bed (23).

5. The disc mowing device according to any claim 1-4, **wherein** the suspension system (1) additionally includes a lever mechanism based on a four-bar linkage comprising a tilting arm, a hydraulic cylinder (6) and a relief spring (7), said lever mechanism connects the suspension frame to the mowing bar (2) and is used to raise and lower the mowing bar (2).

6. The disc mowing device according to any claim 1-5, **wherein** the disc mowing device has guard rails (5) positioned above the mowing bar (2) attached to the suspension system (1) and the mowing bar (2).

7. The disc mowing device according to any claim 1-6, **wherein** the mowing disc (4) consists of a housing (32), preferably in the form of a moulded body with openings for a blade holder (31), wherein at least one cleaning element (33) is attached to said housing (32), and of an at least one mowing blade disposed in the blade holder (31).

## Patentansprüche

1. Scheibenmähvorrichtung, die dazu ausgelegt ist, an ein Kraftfahrzeug, insbesondere einen landwirtschaftlichen Traktor, gekoppelt zu werden, umfassend:
ein Aufhängungssystem (1) mit einem Aufhängungsrahmen, mittels dessen die Scheibenmähvorrichtung an das Kraftfahrzeug gekoppelt wird,
eine Antriebseinheit zum Antreiben mindestens einer Mähscheibe (4),
mindestens einen von unten an einem Mähbalken (2) befestigten Gleitschuh (3),
wobei der Mähbalken (2) mit dem Aufhängungsrahmen verbunden ist und Folgendes umfasst:
ein gebogenes Bett (23),
eine Abdeckung (24),
ein zwischen dem gebogenen Bett (23) und der Abdeckung (24) platziertes Getriebesystem, wobei die mindestens eine Mähscheibe (4) auf einer vertikalen Drehachse in der Abdeckung gelagert und mit dem Getriebesystem gekoppelt ist,
wobei das gebogene Bett (23) eine Z-förmige Biegung umfasst, die sich entlang einer der Längsseiten des Mähbalkens erstreckt, wobei im Bereich dieser Biegung mindestens ein Verstärkungsprofil, das zumindest teilweise an mindestens einer der Wände der Biegung anliegt, an dem gebogenen Bett (23) befestigt ist,
**dadurch gekennzeichnet, dass** die Scheibenmähvorrichtung zwei Verstärkungsprofile umfasst, nämlich ein Verstärkungswinkelprofil (21) und ein Verstärkungs-Z-Profil (22), die im Biegebereich an dem gebogenen Bett (23) so befestigt sind, dass sich das Verstärkungswinkelprofil (21) und das Verstärkungs-Z-Profil (22) zumindest teilweise überlappen.

2. Scheibenmähvorrichtung nach Anspruch 1, **wobei** das mindestens eine Verstärkungsprofil mittels Befestigungselementen, vorzugsweise in Form von Schrauben, die durch Befestigungsöffnungen (25) in dem gebogenen Bett (23) hindurchgeführt sind, am gebogenen Bett (23) befestigt ist.

3. Scheibenmähvorrichtung nach Anspruch 1 oder 2, **wobei** die Wände des Verstärkungswinkelprofils (21) mit ihrer gesamten Oberfläche an zwei Wänden der Biegung des gebogenen Bettes (23) anliegen.

4. Scheibenmähvorrichtung nach Anspruch 3, **wobei** zwei Wände des Verstärkungs-Z-Profils (22) mit ihrer gesamten Oberfläche an den entsprechenden Oberflächen der Wände des Verstärkungswinkelprofils (21) anliegen und eine dritte Wand des Verstärkungs-Z-Profils (22) mit ihrer gesamten Oberfläche an der entsprechenden Wandoberfläche der Biegung des gebogenen Bettes (23) anliegt.

5. Scheibenmähvorrichtung nach einem der Ansprüche 1-4, **wobei** das Aufhängungssystem (1) zusätzlich einen auf einem Viergelenk basierenden Hebelmechanismus beinhaltet, der einen Kipparm, einen Hydraulikzylinder (6) und eine Entlastungsfeder (7) umfasst, wobei der Hebelmechanismus den Aufhängungsrahmen mit dem Mähbalken (2) verbindet und verwendet wird, um den Mähbalken (2) anzuheben und abzusenken.

6. Scheibenmähvorrichtung nach einem der Ansprüche 1-5, **wobei** die Scheibenmähvorrichtung Schutzbügel (5) aufweist, die oberhalb des Mähbalkens (2) angebracht sind und an dem Aufhängungssystem (1) und dem Mähbalken (2) befestigt sind.

7. Scheibenmähvorrichtung nach einem der Ansprüche 1-6, **wobei** die Mähscheibe (4) aus einem Gehäuse (32), vorzugsweise in Form eines Formkörpers mit Öffnungen für einen Messerhalter (31), wobei mindestens ein Reinigungselement (33) an dem Gehäuse (32) befestigt ist, und aus mindestens einem im Messerhalter (31) angeordneten Mähmesser besteht.

## Revendications

1. Dispositif de fauchage à disques configuré pour être attelé à un véhicule à moteur, notamment un tracteur agricole, comprenant :
un système de suspension (1) avec un châssis de suspension au moyen duquel le dispositif de fauchage à disques est attelé au véhicule à moteur,
une unité d'entraînement destinée à entraîner au moins un disque de fauchage (4),
au moins un patin (3) fixé par le bas à une barre de fauchage (2),
la barre de fauchage (2) étant reliée au châssis de suspension et comprenant :
un fond coudé (23),
un couvercle (24),
un système d'engrenages situé entre le fond coudé (23) et le couvercle (24), ledit au moins un disque de fauchage (4) étant monté sur un axe de rotation vertical dans le couvercle et étant accouplé au système d'engrenages,
dans lequel le fond coudé (23) comprend une pliure en forme de Z s'étendant le long de l'un des côtés longs de la barre de fauchage, dans lequel, dans la région de cette pliure, au moins un profilé de renfort adhérant au moins partiellement à au moins l'une des parois de ladite pliure est fixé au fond coudé (23),
**caractérisé en ce que** le dispositif de fauchage à disques comprend deux profilés de renfort, à savoir un profilé angulaire de renfort (21) et un profilé en Z de renfort (22), fixés au fond coudé (23) dans la zone de la pliure, de telle sorte que le profilé angulaire de renfort (21) et le profilé en Z de renfort (22) se chevauchent au moins partiellement.

2. Dispositif de fauchage à disques, selon la revendication 1, **dans lequel** ledit au moins un profilé de renfort est fixé au fond coudé (23) au moyen d'éléments de fixation, de préférence sous forme de vis, traversant des ouvertures de fixation (25) dans le fond coudé (23).

3. Dispositif de fauchage à disques selon la revendication 1 ou 2, **dans lequel** les parois du profilé angulaire de renfort (21) adhèrent sur toute leur surface à deux parois de la pliure du fond coudé (23).

4. Dispositif de fauchage à disques selon la revendication 3, **dans lequel** deux parois du profilé en Z de renfort (22) sont en contact sur toute leur surface avec les surfaces correspondantes des parois du profilé angulaire de renfort (21), et une troisième paroi du profilé en Z de renfort (22) est en contact sur toute sa surface avec la surface correspondante de la paroi de la pliure du fond coudé (23).

5. Dispositif de fauchage à disques selon l'une quelconque des revendications 1 à 4, **dans lequel** le système de suspension (1) comprend en outre un mécanisme à leviers basé sur un quadrilatère articulé comprenant un bras basculant, un vérin hydraulique (6) et un ressort de décharge (7), ledit mécanisme à leviers reliant le châssis de suspension à la barre de fauchage (2) et servant à relever et à abaisser la barre de fauchage (2).

6. Dispositif de fauchage à disques selon l'une quelconque des revendications 1 à 5, **dans lequel** le dispositif de fauchage à disques comporte des barrières de sécurité (5) disposées au-dessus de la barre de fauchage (2) et fixées au système de suspension (1) et à la barre de fauchage (2).

7. Dispositif de fauchage à disques selon l'une quelconque des revendications 1 à 6, **dans lequel** le disque de fauchage (4) se compose d'un boîtier (32), de préférence sous la forme d'un corps moulé comportant des ouvertures pour un porte-lame (31), au moins un élément de nettoyage (33) étant fixé audit boîtier (32), et d'au moins une lame de fauchage disposée dans le porte-lame (31).
